Europäisches Patentamt

European Patent Office

Office européen des brevets

(19)

(11) Publication number: **0 133 004**

**A2**

(12)

# EUROPEAN PATENT APPLICATION

(21) Application number: **84305004.8**

(22) Date of filing: **24.07.84**

(51) Int. Cl.⁴: **G 06 F 11/00**

(30) Priority: 29.07.83 GB 8320486
29.07.83 GB 8320514

(43) Date of publication of application:
13.02.85 Bulletin 85/7

(84) Designated Contracting States:
CH DE FR IT LI NL SE

(71) Applicant: WESTINGHOUSE BRAKE AND SIGNAL
COMPANY LIMITED
Pew Hill
Chippenham Wiltshire(GB)

(72) Inventor: Brown, Christopher Robert
65 New Road
Bromham Wiltshire(GB)

(74) Representative: Bird, Vivian John et al,
PAGE & CO. Temple Gate House
Temple Gate Bristol, BS1 6PL(GB)

(54) **Proving of the safe operation of a single channel processing arrangement.**

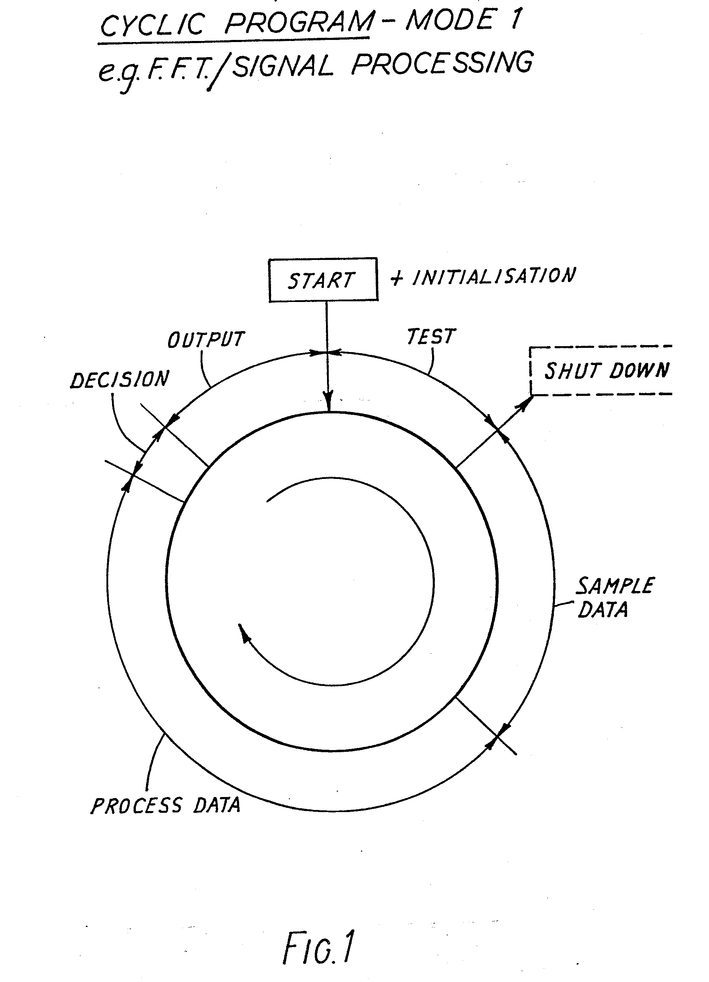

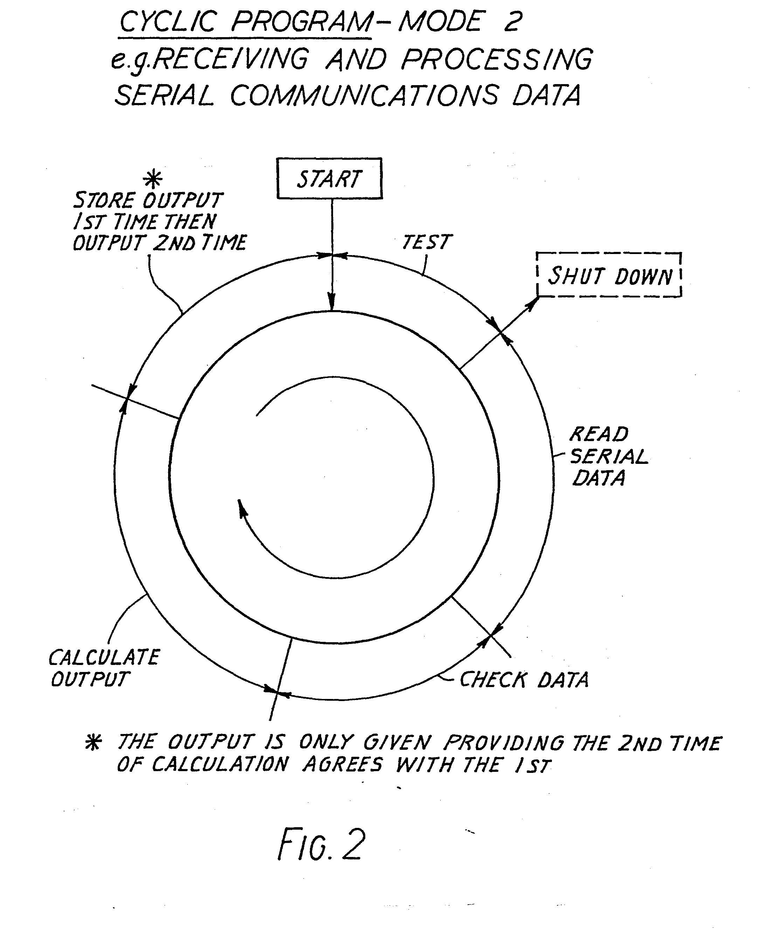

(57) To prove safe operation of a conventional computer based system the processing hardware is multiplied in parallel channels and the individual results cross-correlated to determine the correct result. The proposed arrangement aims to achieve a comparable level of safety using a single processor (7) channel operating cyclically by correlating results computed during different operating cycles (Figure 1, Figure 2). The processor 7 is also checked frequently, preferably during each cycle to guard against processor faults. The cyclic redundancy approach is then able to disqualify results arising from common mode interference and spurious errors in the processor inputs (1).

CYCLIC PROGRAM - MODE 2
e.g. RECEIVING AND PROCESSING
SERIAL COMMUNICATIONS DATA

\* THE OUTPUT IS ONLY GIVEN PROVIDING THE 2ND TIME
OF CALCULATION AGREES WITH THE 1ST

FIG. 2

Croydon Printing Company Ltd.

Proving Safe Operation

The invention relates to ensuring safe operation of a single channel processing arrangement. It is concerned with the failure to safety of electronic systems and is particularly concerned with computer based systems in which the system output has to be "safe".

The invention is particularly useful in systems where a decision concerning safety is based upon the output signal, or the result of the processing operator, so that incorrect operation of the signal processing circuits can directly affect the safety of the system. A normal control signal which requires operation to a state, which if normal control were to be lost be potentially or actually dangerous, is termed a potentially wrong-side signal, and a failure resulting in such a signal being produced is a wrong-side failure. Precautions have to be taken to ensure that wrong-side failures do not happen - or the chance of one occurring is negligible, and that in the event of loss of normal control etc that the output signal occupies a more safe or right-side failure state.

The conventional solution in computer-based systems is the parallel redundancy of computer hardware approach with cross-checking of the separately computed results and some means to choose a correct output signal or to move the output to the right-side failure state in the event of no decision to choose the correct signal.

Whilst computer hardware can perform a large number of activities efficiently and quickly it is a disadvantage that existing arrangements for dealing with safety signals require duplication and even triplication of hardware in redundant systems. Even then precautions are necessary to guard against transient errors due to common-mode failures, for example lightning strikes.

By the term single-channel is meant only a single signal processing path as would be provided by one set of processing hardware as against the plurality of channels or signal paths found in hardware arrangements embodying one of the techniques of parallel redundancy.

The present invention will find application, for example, in a mass transit railway system, such as an underground railway, having an automatic train protection system in which a coded signal representing safe maximum train speed is transmitted to the train, for analysis by the train and comparison with a signal representing measured train speed. If the coded signal is incorrectly encoded or is corrupted before comparison then a wrong decision concerning the maximum speed at which it is safe for the train to travel may be the result. One receiver apparatus for an automatic train protection system of this type is described in the Applicant's published U.K. Patent Specification Serial No. 2,017,991A.

Also in the railway signalling field, the invention may be useful in coded track circuits in which a coded signal is transmitted between a track circuit transmitter and track circuit receiver via the running rails. When the section of rails, i.e. the track section, is unoccupied the signal reaches the receiver, but when a train is present in the section the rails are electrically shorted together thus preventing propagation of the signal along the section. The present invention may be applied to the receiver apparatus in order to verify its correct operation at all times. A railway track circuit receiver of this type to which the invention may be applied is described in Applicant's published U.K. Patent Specification Serial No. 2,114,342A.

According to the invention there is provided a single channel processing arrangement for carrying out a processing operation to provide an output signal comprising a processor, means for controlling operation of the processor to perform a predetermined processing operation in continuously repeated operational cycles to provide at a processor output a result during each operational cycle, store means for storing a first result produced during a first operating cycle, comparison means for comparing with said retained first result a second result produced during a later operating cycle and means responsive to identity being established between the first and second results to pass the same result to provide the output signal.

Preferably during each processing cycle a self test procedure or self diagnostic program is carried out and means is provided for halting operating of the system substantially without delay in response to discovery of a fault. By this means outputs affected by common-mode interference and spurious input errors are disqualified from the processor output.

The invention and how it may be carried into practice will now be described, by way of example only, with reference to the accompanying drawings in which:

Figs. 1 and 2 schematically illustrate the principles of cyclic redundancy in a microprocessor based signal processing arrangement, and

Fig. 3 shows a schematic block diagram of a jointless track circuit receiver employing cyclic redundancy in a microprocessor track signal processing circuit.

Referring now to Fig. 1 this shows a possible sequence of tasks during one operational cycle of a railway signalling receiver of the type described in the Applicants U.K. Patent Specification No. 2,114,342A. The apparatus described therein is suitable for use as, inter alia, a jointless track circuit receiver based upon a microprocessor programmed to execute a Fast Fourier Transform, which is a mathematical technique for digitally analysing a signal waveform in order to discover its constituent frequency components. This process comprises two basic stages, a first, in which amplitude data samples are collected in the time domain and temporarily stored in a memory, in the second and subsequent stage the stored data is operated upon by a Fast Fourier Transform algorithm through its several iterative levels of calculation to a final set of results in the frequency domain which are temporarily stored in the memory for output analysis.

According to the present invention each operational cycle of the apparatus also includes further stages as shown in Fig. 1, immediately following the start of a cycle the apparatus is tested to discover any faults. In practice many parts of the apparatus are constructed individually to fail-safe design principles so that faults are self revealing and the testing is confined to those parts which are not so constructed and need to be continuously or frequently checked in order to maintain confidence in the output. Random access memories (RAM's) for storing data results and read only memories (ROM's) containing operating program instructions and the microprocessor itself which execute the instructions are such circuits which need checking and during the test phase of each program cycle diagnostic programs are carried out in order to check these parts of the apparatus. During subsequent phases of a cycle input data is collected, by sampling and digitizing until sufficient has been collected. It is then processed i.e. operated upon by the transform algorithm.

In the next phase of the cycle indicated in the drawing the result of the computation process is produced in read-out and compared with the result computed during a previous cycle, preferably the result from the last preceding cycle. Only if these results correspond exactly, or within a predetermined margin of error, can the output phase be undertaken during which the contents of the results memory are read out for frequency analysis. It is to be noted that the decision phase does not enquire whether the results are correct but merely that the results of two successive cycles are the same, if no correspondence is found no output is made or the output is somehow disqualified and the last result is retained for subsequent comparison with the result of the next cycle. In this way the apparatus is able to accommodate changing inputs. The decision stage cannot initiate shut down of the apparatus but can only disqualify individual outputs, shut down of the apparatus can only be undertaken in response to the results of the testing phase. There are several possible alternative arrangements by means of which the output may be inhibited or diqualified, in the event of an error being discovered. Generally the particular technique chosen will be determined according to the manner and/or hardware employed for the comparison of a new result with an old result, some examples of this will

0133004

be discussed further below.

Although shown in Fig. 1 as a separate phase of the operational cycle the self testing or self-diagnostic instructions may be inter-laced with program instructions throughout the whole or any part of an operational cycle. In response to the outcome of these tests or diagnoses the whole processing system may be shut-down and the final output switched into its most safe state for an indefinite period until the fault is cleared or the system replaced.

In particular applications of the present invention previously referred to, and about which more will be said later, the central part of the processing hardware comprises a microprocessor programmed to perform a discrete or Fast Fourier Transform algorithm. One such apparatus is described in the Applicants published U.K. specification Serial No. 2,114,342A. The computed result povided by the apparatus consists of a series of bytes each of which comprises a binary digital number representing a computed level of frequency components lying with in an elemental part of a frequency spectrum, and which together comprise the original complex waveform. Thus, if it is wished to identify or respond to a particular frequency in the input waveform it is only necessary to apply some form of level discrimination to the computed result for the corresponding elementary part of the frequency spectrum.

In addition to the apparatus described for carrying out the transform analysis of a waveform the present invention requires in addition: in one embodiment, means for storing at least two complete sets of computed results, or bytes relating to selected elementary parts of the frequency spectrum, means for comparing a new stored result with an old stored result to determine correspondence, and means responsive to positive correspondence to pass the agreed correct result to an output of the channel processing arrangement.

The means for storing results may comprise digital shift registers or random access memories in which the computed result is stored using as an address the identity of the frequency spectrum element. A memory may be provided for each of the old result and the new result, the comparison means then operates to compare the contents of the corresponding locations of the two memories and to provide a required output when postive correspondence exists or to provide and alternative output, or to inhibit an output, or to disqualify an existing output. For example, the output of the old memory may be read-out if there is correspondence and held at a constant predetermined level in the absence of correspondence. Alternatively the memory contents may be read-out bit-by-bit as each is compared with the corresponding bit of the new result, in which case when a lack of correspondence is determined the output is switched to a predetermined state thus spoiling the output. The following circuits connected to the processor channel output (i.e. binary level discriminators) are arranged to accept only complete output messages comprising all selected results so that incomplete messages are automatically disqualified and disregarded. One way of achieving the latter is by the use of error detection codes and/or parity checking, or by requiring a continuously dynamic signal, in all of the methods an output held at a constant level automatically disqualifies the whole output message.

In a further alternative arrangement there is only one memory employed into which is stored the old result and the new result is overwritten into the memory as it is produced erasing the old result as this progresses. A bit-by-bit (or byte-by-byte) comparison is carried-out concurrently together with simultaneous production of the output signal and the output signal is disqualified should lack of correspondence be detected in the comparison procedure.

In the event of lack of correspondence being detected the procedure continues, except that the output is disqualified etc, so that the complete new result is retained to become the next old result and the comparison procedure is commenced afresh during the next cycle when a new result is produced.

In a still further alternative arrangement the comparison process is performed using the same processor which performs the transform computation or a separate processor. The steps of the comparison procedure and the decision steps are in that case set out in special program instructions.

Referring now to Fig. 2 there is shown, again schematically, an operational cycle for apparatus for receiving and verifying safety data which may be transmitted, for example, between central and satellite inter-locking equipment in a railway station or between the inter-locking equipment and local area track side modules.

In one such arrangement employing a single channel transmission system two successive data frames have to be checked for correspondence before a control signal may be executed, in which a typical operational cycle, as illustrated in Fig. 2 comprises the initial test phase, a second phase during which two sets of signal data frames are received and read, a third phase during which these data frames are checked for correspondence, a fourth phase during which an output is calculated or an inter-locking function may be carried out, and finally this output from two successive cycles is also checked for correspondence and an output provided only when the second such output is identical with the first.

In another similar embodiment the original data signals are transmitted via parallel data links so that during the second read data phase the two (or more) sets of data are received substantially simultaneuously.  The complete operational cycle is again carried out twice and the results from the second cycle compared with the first and only when there is correspondence in an output produced.

Again as previously mentioned, the apparatus testing instructions may be inter-laced with the remaining operating program instructions rather than being confined to a separate test phase.

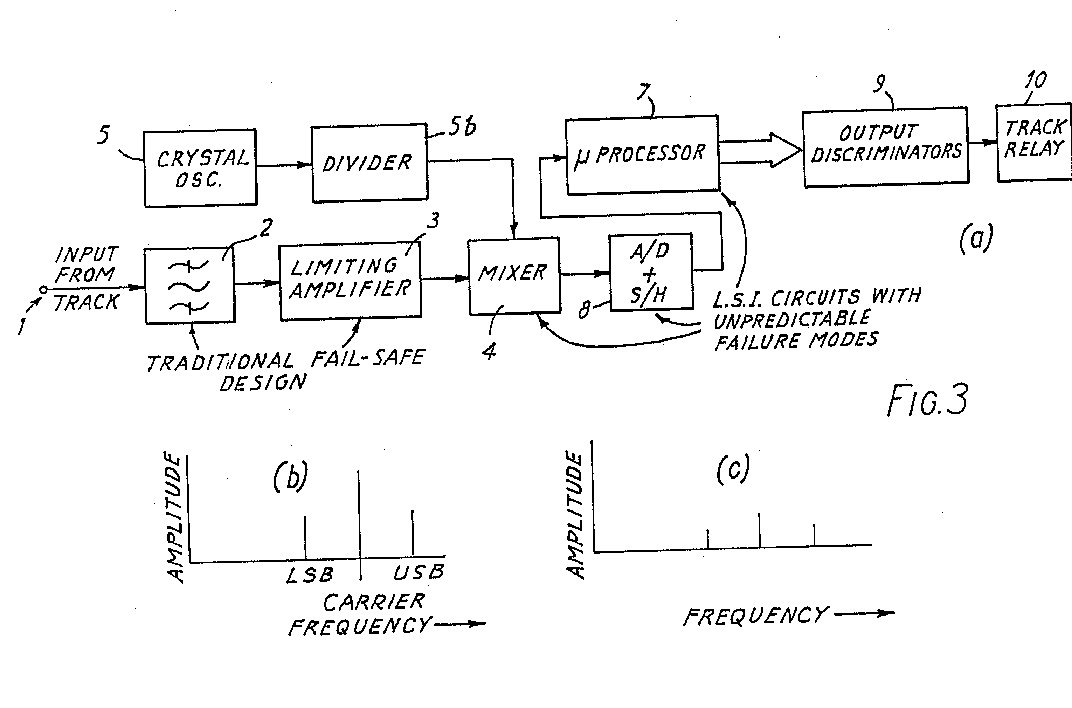

Referring now to Fig. 3, parts (a), (b) and (c) there is a block diagram of a jointless track circuit receiver similar to that described in the above mentioned specification GB 2,114,342A.  The track signal comprises a frequency modulated carrier signal which is connected to the input of the receiver 1 connected to a band-pass filter 2 and a limiting amplifier 3 which are both of traditional fail-safe design, i.e. both circuits have predictable failure modes which result in a steady state d.c. voltage output.  The output from amplifier is connected to one input of a mixer 4, the other input of which is a continuous proving tone signal derived from a crystal oscillator 5 and frequency divider 6.  The purpose of the oscillator, divider and mixer being comparable to the intermediate frequency generator of a heterodyne receiver. The divided oscillator frequency is selected to "heterodyne" the received signal to a sufficiently low frequency to make maximum use of the transform processor bandwidth and frequency resolution.

The raw microprocessor 7 is collected by analogue to digital circuits and sample and hold circuits generally indicated by block reference 8. The circuits of mixer 4, microprocessor 7 and block 8 are, in the example being described, large scale integrated circuits which consequently have unpredictable failure modes and therefore are subjected to testing during each operational cycle of microprocessor 7.

There is also shown in Fig. 3 at (b) and (c) respectively the amplitude levels of the output signals from mixer 4 for an unoccupied and an occupied track section respectively.

The output of the microprocessor 7 comprises the computed results of the signal levels present in each resolved frequency spectrum element. These computed results are subjected to detection by level discriminators in block 9 which respond to the presence above a predetermined threshold of a signal in a selected frequency spectrum element to energise a track relay 10. The track relay 10 is picked-up to indicate an unoccupied track section so that it is essential that the outputs from microprocessor 7 shall be proved safe.

In accordance with the present invention the above described method is employed to prove the safety of the output of the microprocessor 7 by the correlation of the results of two successive operating cycles. In operation the received track circuit signal level drops to a substantially lower level when the track section is occupied by a railway vehicle. The results of the first cycle during occupancy therefore will not positively correlate with the previous cycle and the invention will operate to disqualify the corresponding output, i.e. to remove the energising signal for the track relay 10. However, the new result produced during the new cycle should, under normal circumstances be the same as the old result produced during the first cycle and the track relay energising signal is restored. Consequently the track relay energising circuit loop is designed to provide a relay release time greater than the period of one microprocessor operating cycle.

The track circuit may be use a coded track circuit signal for additional security in which case the code signals also appear in the microprocessor transform results and are included in the level discrimination steps leading to production of the track relay energising signal.

The second application of the invention mentioned involves its use in an automatic train protection system of the type described in GB patent specification No. 2,017,991A. In such a system a carrier signal is generated and modulated by a selected one of several alternative code frequencies each one of which signifies a safe maximum speed limit. The encoded carrier is transmitted to a train carrying a suitable receiver and decoding equipment, often via the track rails using the track circuit signal as the carrier signal. The train borne receiver equipment includes a frequency analyser including a signal channel processor as described above. The results from the processor being checked according to the invention before decoding by the emergency brake system control. In

- 12 -

0133004

addition a similar frequency analyser embodying the invention is employed in the track circuit transmitter to check that the coded track circuit signal is correct and to inhibit its transmission if it found incorrect in any of the essential characteristics of its frequency components.

Apparatus of the present invention may also be used in conjunction with an arrangement according to the Applicant's G.B. Application No. 8320514, in which correct operation of the microprocessor 7 above, for example, may be proved by superimposing a known proving signal upon its normal input and searching for the characteristics of the signal in the output.  In addition the output enable gate of the Applicant's G.B. Application No. 8320509 may be employed as means for disqualifying in output.  Reference to G.B. patent applications are to be construed as also implying reference to patent applications whether British or foreign which claim priority therefrom.

Claims

1. A single channel processing arrangement for carrying out a processing operation to provide an output signal comprises a processor (7),means for controlling operation of the processor to perform a predetermined processing operation in continuously repeated operational cycles (Fig. 1, Fig. 2) to provide at a processor output a result during each operational cycle, characterised by store means for storing a first result produced during a first operating cycle, comparison means for comparing with said retained first result a second result produced during a later operating cycle and means responsive to identity being established between the first and second results to pass the same result to provide the output signal.

2. An arrangement as claimed in Claim 1 further characterised in that the later operating cycle (Fig. 1, Fig. 2) is the next succeeding operating cycle.

3. An arrangement as claimed in Claim 1 or 2 further characterised in that the old result which is retained in the store means during the earlier cycle is replaced by a new result during the later cycle and the new result is compared with old result substantially concurrently with its entry into the store means.

4. An arrangement as claimed in any one of Claims 1 to 3 further characterised by second store means for storing the result produced during the later cycle, and the comparison means is connected to the first and second store means for the purpose of comparing the two results.

5. An arrangement as claimed in any one of the preceding claims characterised in that the processor produces a binary digital result comprising at least one byte and the corresponding bytes of new and old results are compared.

6. An arrangement as claimed in any one of the preceding claims wherein the processor is arranged to perform a frequency spectrum analysis of an complex waveform during each operational cycle and the results produced by the processor comprise frequency components of the waveform computed during respective cycles.

7. An arrangement as claimed in Claim 6 wherein the processor is arranged to perform a frequency spectrum analaysis in accordance with a method of Fourier analysis.

8. An arrangement according to either Claim 6 or Claim 7 adapted for use in an automatic train protection system wherein the processor has an input connected with a receiver for a train protection signal and the output signal of the arrangement is connected for the control of a train emergency braking system.

9. An arrangement according to either Claim 6 or Claim 7 adapted for use in a railway jointless track circuit receiver wherein the processor (7) has an input (1) connected with a track circuit receiver for a track circuit signal and the output signal of the arrangement is conncted with means (10) for indicating the state of occupancy of a track circuit.

0133004

## CYCLIC PROGRAM – MODE 1
### e.g. F.F.T./SIGNAL PROCESSING

START   + INITIALISATION

OUTPUT

DECISION

TEST

SHUT DOWN

SAMPLE
DATA

PROCESS DATA

FIG.1

CYCLIC PROGRAM—MODE 2
e.g. RECEIVING AND PROCESSING
SERIAL COMMUNICATIONS DATA

* STORE OUTPUT
IST TIME THEN
OUTPUT 2ND TIME

START

TEST

SHUT DOWN

READ
SERIAL
DATA

CALCULATE
OUTPUT

CHECK DATA

* THE OUTPUT IS ONLY GIVEN PROVIDING THE 2ND TIME
OF CALCULATION AGREES WITH THE 1ST

FIG. 2

FIG.3

0133004